# EUROPÄISCHE PATENTSCHRIFT

(11) **EP 1 950 492 B1**
(45) Veröffentlichungstag und Bekanntmachung des Hinweises auf die Patenterteilung: **02.12.2009**
(21) Anmeldenummer: 08000996.2
(22) Anmeldetag: 19.01.2008
(51) Int. Cl.: F21S 8/10, B60Q 1/26

(54) **Leuchte für Fahrzeuge, vorzugsweise für Kraftfahrzeuge**
Lamp for vehicles, in particular motor vehicles
Eclairage pour véhicules, de préférence pour véhicules automobiles

(30) Priorität: 25.01.2007 DE 102007005551
(43) Veröffentlichungstag der Anmeldung: 30.07.2008
(73) Patentinhaber: odelo GmbH, 71409 Schwaikheim (DE)
(72) Erfinder: Mertens, Jens, 73734 Esslingen (DE)
(74) Vertreter: Meyer, Thorsten

(56) Entgegenhaltungen:
- EP-A- 0 442 095
- FR-A- 2 775 229
- US-A- 4 855 877

## Beschreibung

Die Erfindung betrifft eine Leuchte für Fahrzeuge, vorzugsweise für Kraftfahrzeuge, nach dem Oberbegriff des Anspruches 1.

Aus der DE 198 11 570 C2 ist eine Leuchte bekannt, die als Scheinwerfer für Fahrzeuge ausgebildet ist. Die Leuchte hat ein Gehäuse, eine Lichtscheibe und eine Lichtquelle. Die Lichtscheibe weist mittig eine erste Teilfläche mit optischen Ablenkeigenschaften auf. Im äußeren Randbereich zwischen dieser Teilfläche und der Lichtscheibe ist diese zumindest teiltransparent ausgebildet. Durch diese Maßnahme wird eine scharfe Kontur der ersten mittigen Teilfläche erreicht, die zudem noch optische Blinkeigenschaften aufweist.

Durch die FR 2 775 229 ist eine Leuchte mit einem in mehrere Kammern unterteilten Gehäuse bekannt, wobei jede Kammer mit einem Leuchtmittel bestückt ist und jede Kammer jeweils unterschiedliche Signalfunktionen erfüllt. Zumindest die Kammern sind durch eine transparente Lichtscheibe abgedeckt. Die Lichtscheibe besteht aus mehreren Segmenten. Eine lichtundurchlässige Maske ist zwischen Gehäuse und Lichtscheibe angeordnet. Sie trennt unterschiedlichen Kammern zugeordnete Teile der Lichtscheibe. Die Maske kann das Leuchtmittel einer oder mehrerer Kammern abdecken, wodurch eine Kammer wie zwei getrennte Kammern erscheint. Die Maske 22 ist auf der dem Leuchtmittel zugewandten Seite mit einer Verspiegelung versehen. Die Maske ist auf der dem Leuchtmittel abgewandten Seite mit Rückstrahlern versehen. Die Lichtscheibe selbst ist an jeder Stelle lichtdurchlässig.

Durch die EP 0 442 095 A2 ist eine Heckleuchte mit einem Gehäuse und einer Lichtscheibe bekannt. Hinter der Lichtscheibe ist wenigstens ein Leuchtmittel vorgesehen. Die Lichtscheibe ist in mindestens zwei getrennte, lichtdurchlässige und mit Abstand voneinander angeordnete Lichtfenster aufgeteilt, die gleiche oder unterschiedliche Leuchtfunktionen haben und zwischen denen mindestens ein durch einen zum Gehäuse gehörenden Steg gebildeter, wenigstens teilweise lichtundurchlässiger Bereich vorhanden ist. Innerhalb einzelner Lichtfenster sind im Prägeverfahren von innen auf das Lichtfenster aufgebrachte, eingefärbte, lichtundurchlässige Streifen vorgesehen. Dadurch erscheint der Lichtscheibenabschnitt für das weiße Rückfahrlicht in ausgeschaltetem Zustand der Heckleuchte nicht mehr in einem krassen farblichen Unterschied zu dem Signalrot für das Brems- Schluss- und Nebellicht.

Der Erfindung liegt die Aufgabe zugrunde, die gattungsgemäße Leuchte so auszubilden, dass ihre geteilten Lichtfenster bei einfacher Ausgestaltung und kostengünstiger Herstellung in beleuchtetem Zustand als geschlossene Leuchtfläche wahrgenommen werden.

Diese Aufgabe wird bei der gattungsgemäßen Leuchte erfindungsgemäß mit den kennzeichnenden Merkmalen des Anspruches 1 gelöst.

Durch die US 4,855,877 ist eine Leuchte bekannt, bei der die Lichtscheibe in unterschiedliche Lichtfenster unterteilt ist. Innerhalb eines Lichtfensters sind eingefärbte, lichtundurchlässige Streifen vorgesehen, um die Lichtscheibe in ausgeschaltetem Zustand der Leuchte aus Sicht eines entfernten Betrachters auch im Bereich des weißen Rückfahrlichts in einem gleichmäßigen roten Farbton erscheinen zu lassen.

Bei der erfindungsgemäßen Leuchte befindet sich im lichtundurchlässigen Bereich zwischen den beiden Lichtfenstern der zusätzliche lichtdurchlässige Bereich. Durch ihn wird erreicht, dass trotz des geteilten Lichtfensters ein vom Gesetzgeber gefordertes zusammenhängendes Lichtfenster für einen Betrachter erkennbar ist, wenn die beiden Lichtfenster die gleiche Lichtfunktion erfüllen. Der zusätzliche lichtdurchlässige Bereich kann klein sein. Er ist so im Zwischenbereich zwischen den Lichtfenstern angeordnet, dass ein Betrachter alle Lichtfenster als ein einziges Lichtfenster wahrnimmt. Die nichtleuchtenden Zwischenbereiche verschwimmen ab einem bestimmten Abstand im Auge des Betrachters, so dass er die Lichtfenster und den zusätzlichen lichtdurchlässigen Bereich nicht mehr als einzelne Lichtfenster wahrnimmt.

Solche Lichtfenster in Leuchten sind dann von besonderem Interesse, wenn designrelevante Bereiche der Leuchte als ein Teil der Karosserie wirken sollen. Eine Aufteilung in einzelne Lichtfenster ist dann nicht mehr zu vermeiden. Als Alternative steht dann nur noch die Vergrößerung der Leuchte insgesamt zur Verfügung, da die gesetzlichen Mindestflächen der Lichtfunktionen der Leuchte zu erfüllen sind. Solche großen Leuchten sind jedoch aus ästhetischen Gründen nicht akzeptabel. Mit der erfindungsgemäßen Leuchte lassen sich die gesetzlichen Mindestflächen der Lichtfunktionen erfüllen, ohne dass die Leuchte insgesamt vergrößert werden muss.

Die erfindungsgemäße Leuchte hat ferner den Vorteil, dass sie sehr kostengünstig hergestellt werden kann, da im wesentlichen die gleichen Werkzeuge wie bei Standardleuchten zum Einsatz kommen können.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigt:
- Fig. 1: eine Leuchte mit zwei voneinander getrennten Lichtfenstern für eine Leuchtenfunktion,
- Fig. 2: eine erfindungsgemäße Leuchte mit voneinander getrennten Lichtfenstern, die durch einen Zwischenbereich voneinander getrennt sind, in dem streifenförmige Lichtdurchlassbereiche vorgesehen sind,
- Fig. 3: in schematischer Darstellung einen Schnitt durch die Leuchte gemäß Fig. 2,
- Fig. 4 und Fig. 5: jeweils in Darstellungen entsprechend Fig. 3 weitere Ausführungsformen von erfindungsgemäßen Leuchten.

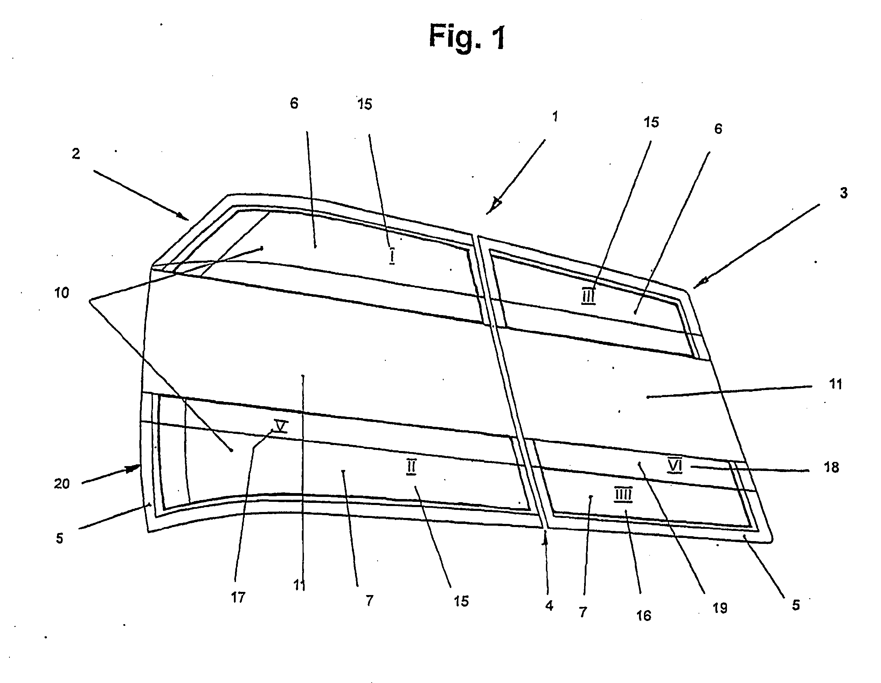

Fig. 1 zeigt eine Leuchte 1 mit zwei getrennten Lichtfenstern 6, 7 für eine gemeinsame Leucht- bzw. Signalfunktion. Die Leuchte 1 ist eine Heckleuchte für Kraftfahrzeuge, die in zwei Teile 2 und 3 aufgeteilt ist. Die Trennfuge 3 der Leuchtenteile 2, 3 befindet sich zwischen der Karosserie des Kraftfahrzeuges und dessen Heckdeckelklappe. Der Leuchtenteil 2 ist karosserieseitig im Kotflügel befestigt, während der Leuchtenteil 3 in bzw. an der Heckdeckelklappe bzw. Kofferraumklappe befestigt ist. Der karosserieseitige Leuchtenteil 2 ist beispielhaft kleiner als der klappenseitige Leuchtenteil 3. Je nach Kraftfahrzeugtyp können die Größenverhältnisse auch umgekehrt sein, oder beide Leuchtenteile 2, 3 können gleiche Größe haben. Die Leuchtenteile 2, 3 können unterschiedlichste Umrisse aufweisen.

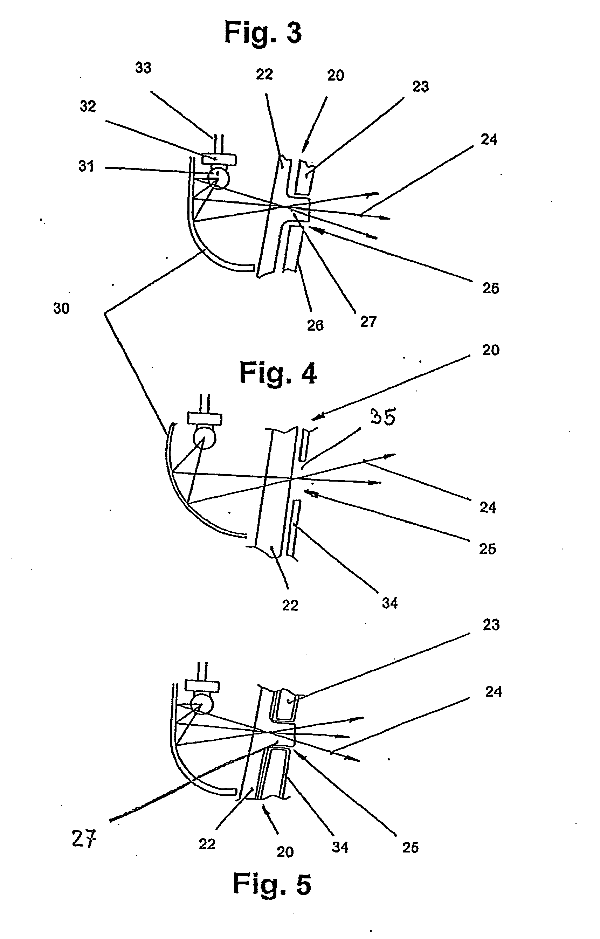

Beide Leuchtenteile 2, 3 weisen jeweils das obere Lichtfenster 6 und das untere Lichtfenster 7 auf, die jeweils durch einen lichtundurchlässigen bzw. teildurchlässigen Bereich 11 voneinander getrennt sind. Dieser ist im wesentlichen mittig zu den Leuchtenteilen 2, 3 angeordnet. Der Bereich 11 ist beispielsweise ein eingefärbter oder in der Wagenfarbe lackierter Teil einer Lichtscheibe 20, die die Leuchte 1 an einer Seite abschließt. Hinter dem Bereich 11 kann wenigstens ein Leuchtmittel 31 (Fig. 3 bis 5) angeordnet sein, das nur diesen Bereich 11 ähnlich einem Positionslicht in einem schwachen, matten Licht erscheinen lässt bzw. beleuchtet. Das Leuchtmittel 31 ist im Ausführungsbeispiel eine Glühlampe, es kann aber auch eine LED oder ein sonstiges Leuchtmittel sein. Die Glühlampe sitzt in einer Fassung 32, an die elektrische Leitungen 33 zur Stromversorgung der Glühlampe angeschlossen sind.

Das obere und das untere Lichtfenster 6 und 7 jedes Leuchtenteiles 2, 3 können innerhalb der Leuchte 1 miteinander verbunden sein. Zur Beleuchtung der Lichtfenster 6, 7 reicht ein einziges Leuchtmittel 31 aus, wenn dessen Licht über einen gemeinsamen Reflektor 30 zu den Lichtfenstern reflektiert wird. Ein außenstehender Betrachter hat dann den Eindruck, dass es sich um zwei einzelne Leuchten handelt. Selbstverständlich kann hinter dem Lichtfenster 6, 7 auch jeweils ein eigener Leuchtenbereich vorgesehen sein, der wenigstens ein Leuchtmittel 31 und wenigstens einen Reflektor 30 aufweist.

Den beiden Lichtfenstern 6, 7 der Leuchtenteile 2, 3 können gleiche Lichtfunktionen 15 und unterschiedliche Lichtfunktionen 15, 17 zugeordnet werden. Beispielsweise kann das obere Lichtfenster 6 des klappenseitigen Leuchtenteils 3 die gleiche Lichtfunktion 15 bis 17 haben wie das obere und das untere Lichtfenster 6, 7 des karosserieseitigen Leuchtenteiles 2. Das untere Lichtfenster 7 des klappenseitigen Leuchtenteiles 3 kann beispielsweise in zwei oder mehrere unterschiedliche Lichtfunktionen aufgeteilt sein. Die untere Hälfte kann beispielsweise als Nebelschlussleuchte 16 oder als Rückfahrlicht 19 ausgelegt sein. Die obere Hälfte dieses unteren Lichtfensters 7 kann beispielsweise einen Rückstrahlreflektor 18 bilden. Selbstverständlich sind bei diesen Lichtfunktionen die unterschiedlichsten Kombinationen und Verbindungen möglich.

Als eine weitere Kombinationsmöglichkeit können zum Beispiel die Lichtfenster 6, 7 des karosserieseitigen Leuchtenteiles 2 eine Mehrfachlichtfunktion aufweisen, wobei beispielsweise mit einem vorhandenen Schlusslicht 15 ein Fahrtrichtungsanzeiger 17 kombiniert sein kann. Bei einem entsprechend großen Abstand der oberen Lichtfenster 6 von den unteren Lichtfenstern 7 entsteht für einen außenstehenden Betrachter der Eindruck, dass es sich um zwei eigenständige Lichtfenster/Leuchten handelt.

Wie Fig. 1 zeigt, wird beispielsweise das Schlusslicht 15 durch die beiden Lichtfenster 6, 7 des karosserieseitigen Leuchtenteiles 2 gebildet. Entsprechend den gesetzlichen Vorgaben muss das Schlusslicht 15 bei einer Rückleuchte, bei der das Schlusslicht 15 in mehrere unabhängig voneinander beabstandete Felder aufgeteilt ist, zusammen 60% der Fläche der gesamten Rückleuchte betragen. Diese Vorschrift gilt nicht bei nicht aufgeteilten Flächen 6, 7. Hier erscheint das Schlusslicht 15 immer als geschlossene zusammenhängende Fläche.

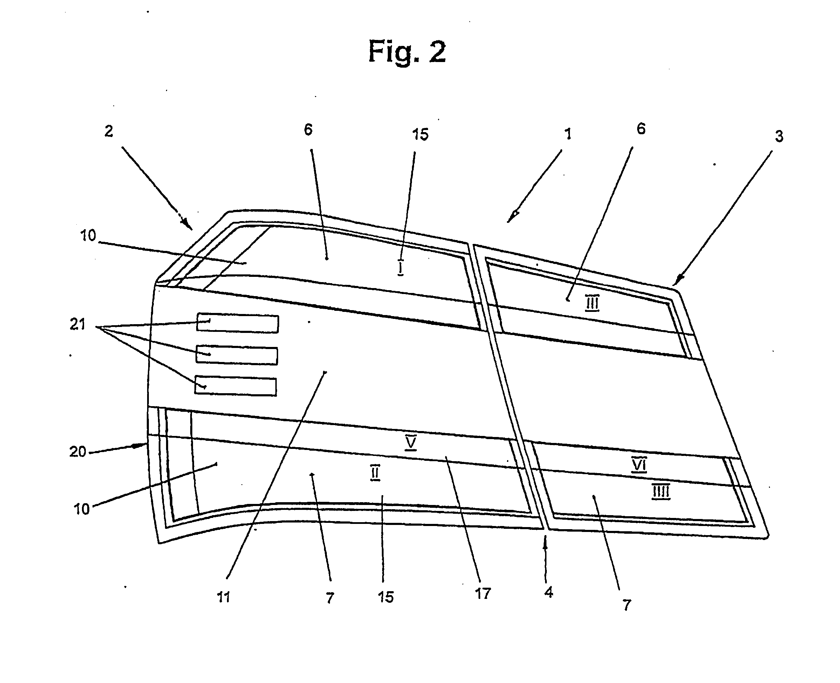

Um diese Forderung bei einer solchen geteilten Leuchte zu erfüllen, sind gemäß Fig. 2 beim karosserieseitigen Leuchtenteil 2 im lichtundurchlässigen Bereich 11 zwischen dem oberen und dem unteren Lichtfenster 6, 7 streifenförmige lichtdurchlässige Bereiche 21 vorgesehen. Sie sind zusätzliche kleine Lichtfenster, die die gleichen Lichtfunktionen wie das obere und/oder untere Lichtfenster 6, 7 des Leuchtenteiles 2 aufweisen. Ein außenstehender Betrachter, der sich in ausreichendem Abstand vom Fahrzeug befindet, empfindet die Leuchte 1 mit dem oberen und dem unteren Lichtfenster 6, 7 und dem Bereich 21 als eine geschlossene Leuchte.

Hierbei ist es nötig und vom Gesetzgeber vorgeschrieben, dass der obere Rand des Bereiches 21 nicht mehr als 15 mm vom unteren Rand des oberen Lichtfensters 6 entfernt angeordnet ist. Dieselbe Bedingung gilt auch für die untere Kante des Bereiches 21, die einen Abstand von maximal 15 mm zur Oberkante des unteren Lichtfensters 7 haben muss. Durch diesen geringen Abstand wird sichergestellt, dass der rückseitig stehende Betrachter die aus einiger Entfernung betrachtete Leuchte 1 als durchgehendes Lichtfenster 6, 7, 21 wahrnimmt. Selbstverständlich kann der Bereich 21 auch als einteiliger Bereich ausgebildet sein. Besteht der Bereich 21, wie Fig. 2 zeigt, aus mehreren einzelnen streifenförmigen Elementen 21, darf der Abstand zwischen einander benachbarten Elementen 21 nicht größer sein als 15 mm. Die Bereiche 21 können sowohl in der linken als auch in der rechten Hälfte sowie mittig zwischen den oberen und unteren Lichtfenstern 6, 7 liegen.

Es ist nicht zwingend notwendig, dass die Bereiche 21 eine rechteckige Streifenform aufweisen. Es sind auch andere Formen möglich, vorausgesetzt, es entsteht der Eindruck, das obere und das untere Lichtfenster 6, 7 sind miteinander verbunden. Zum Beispiel können die Bereiche 21 Kreise sein oder elliptische oder gerundete, dreieckige oder mehreckige Formen aufweisen.

Die Bereiche 21 können wie die einzelnen Lichtfenster 6, 7 mehrere unterschiedliche Lichtfunktionen aufweisen. Es kann zum Beispiel im oberen Lichtfensterbereich das Lichtfenster 6 als Schlusslicht 15 mit einem teilabgrenzenden Bereich als Fahrtrichtungsanzeiger 17 ausgebildet sein, während das untere Lichtfenster 7 beispielsweise ausschließlich als Schlusslicht 15 dient. Die Bereiche 21 können in diesem Fall als Fahrtrichtungsanzeiger 17 und/oder als Schlusslicht 15 betrieben werden. Die Verwendung derartiger Bereiche 21 ist nicht nur auf den karosserieseitigen Leuchtenteil 2 beschränkt. Selbstverständlich kann auch der klappenseitige Leuchtenteil 3 solche Bereiche 21 aufweisen.

Als zusätzliches Designelement können streifenförmige Bereiche 21 im äußeren Randbereich der zwei Leuchtenteile 2, 3 angeordnet sein. Hierbei entsteht der Effekt, dass die Leuchte 1 als geschlossener Rahmen erscheint.

Fig. 3 zeigt einen Schnitt durch die Leuchte 1, die mit der Lichtscheibe 20 versehen ist. Sie besteht aus zwei Schichten 22, 23, die beispielsweise in einem Mehrspritzverfahren zur Lichtscheibe 20 zusammengefügt werden. Der lichtundurchlässige Bereich 11 ist mit einem in Längsrichtung sich erstreckenden streifenförmigen Lichtdurchlassbereich 25 versehen. Beim Spritzen der einen Schicht 22 dringt der Kunststoff in den Lichtdurchlassbereich 25 ein, wobei eine entsprechende Verdickung 27 gebildet wird. Anschließend wird auf die innere Schicht 22 die äußere Schicht 23 gespritzt, deren Dicke zumindest annähernd der Höhe der Verdickung 27 entspricht. Im Ausführungsbeispiel hat der lichtundurchlässige Bereich 11 drei streifenförmige, mit Abstand parallel zueinander liegende Lichtdurchlassbereiche 25. Dementsprechend ist die innere Schicht 22 mit drei Verdickungen 27 versehen. Sie bilden nach Beendigung des Spritzverfahrens die beschriebenen streifenförmigen, lichtdurchlässigen Bereiche 21. Die äußere Schicht 23 besteht im Ausführungsbeispiel aus einem lichtundurchlässigen und teiltransparenten, stark eingefärbten Material, das beim Spritzverfahren mit der inneren Schicht 22 eine unlösbare Verbindung eingeht. Die Außenseite der Schicht 23 und die Stirnseiten der Verdickungen 27 bilden an der fertigen Lichtscheibe 20 eine durchgehende homogene ebene Fläche.

Lichtstrahlen 27, die vom Leuchtmittel 31 ausgesandt und über den Reflektor 30 auf den rückwärtigen Bereich der Schicht 22 reflektiert werden, können in den Bereichen, in denen sich die äußere Schicht 23 befindet, nicht durch die Lichtscheibe 20 nach außen treten. Allenfalls werden die Lichtstrahlen 24 zum Reflektor 30 zurück reflektiert. Die Strahlen 24 werden solange hin- und herreflektiert bis sie auf eine der Verdickungen 27 treffen, die die lichtdurchlässigen Bereiche 21 bilden. In diesen Bereichen können die Lichtstrahlen 24 durch die Lichtscheibe 20 hindurch nach außen treten (Fig. 3). Die innere Schicht 22 der Lichtscheibe 20 ist aus transparentem Material hergestellt bzw. so eingefärbt, dass die Lichtstrahlen 24 ungehindert nach außen treten können.

Auf der äußeren Seite der äußeren Schicht 23 der Lichtscheibe 20 können reflektierende Strukturen oder sonstige von außen erkennbare Strukturen, wie beispielsweise die Reflektoren 18, aufgebracht sein.

Beim Ausführungsbeispiel gemäß Fig. 4 ist auf die innere Schicht der Lichtscheibe 20 eine Beschichtung 34 aufgebracht. Zur Ausbildung der lichtdurchlässigen Bereiche 21 ist die Beschichtung 34 mit Unterbrechungen 35 versehen. Im Unterschied zur vorigen Ausführungsform hat die innere Schicht 22 keine Verdickungen zur Ausbildung der Bereiche 21. Die Beschichtung 34 bildet die Außenseite der Lichtscheibe 20 und kann eine Farbbeschichtung oder eine Folienbeschichtung sein. Im Übrigen ist die Ausführungsform nach Fig. 4 gleich ausgebildet wie die nach Fig. 3.

Besteht die Beschichtung 34 aus einer Farbbeschichtung, müssen die Bereiche 21 für das Lackierverfahren maskiert werden. Bei einer Folienbeschichtung können zur Bildung der Bereiche 21 Teile aus der Folie entfernt sein. Diese fehlenden Teile bilden nach der Befestigung der Folie auf der Schicht 22 die lichtdurchlässigen Bereiche 21. Das vom Leuchtmittel 31 abgestrahlte Licht wird über den Reflektor 18 oder direkt (wie anhand von Fig. 3 beschrieben) durch die Schicht 22 und die lichtdurchlässigen Bereiche 21 nach außen treten.

Die Folie 34 lässt sich einfach und kostengünstig herstellen und auf die Schicht 22 aufbringen. Es ist kein aufwändiges und teures Spritzverfahren erforderlich wie beim Ausführungsbeispiel nach Fig. 3.

Fig. 5 zeigt eine Ausführungsform, bei der die innere Schicht 22 der Lichtscheibe 20 gleich ausgebildet ist wie beim Ausführungsbeispiel nach Fig. 3. Die Schicht 22 hat die Verdickung 27 zur Bildung der lichtdurchlässigen Bereiche 21. Die äußere Schicht 23 wird von der Beschichtung 34, die beispielsweise eine Farb- oder Folienbeschichtung sein kann, vollständig umhüllt.

Die äußere Schicht 23 der Lichtscheibe 20 wird in einem ersten Schritt in einem Kunststoffspritzverfahren hergestellt. In einem zweiten Schritt wird die Schicht 23 mit der Beschichtung 34 umhüllt. Anschließend wird das beschichtete Teil in ein Spritzgießwerkzeug eingelegt, in dem die innere Schicht 22 der Lichtscheibe 20 mit der Verdickung 27 angespritzt wird. Die innere Schicht 22 mit der Verdickung 27 besteht vorteilhaft aus transparentem, eingefärbtem transparenten oder einem von der äußeren Schicht 23 unterschiedlichen Material.

Bei einer anderen Herstellungsweise wird die Schicht 22 mit der Verdickung 27 in einem ersten Spritzgießverfahren hergestellt. Die mit der Beschichtung 34 versehene äußere Schicht 23 wird dann auf die innere Schicht 22 aufgelegt und mit ihr mittels eines Klebe- oder Schweißverfahrens verbunden. Die Beschichtung 34 kann auf der Schicht 22 und/oder auf der Schicht 23 mit einer oder unterschiedlichen Strukturen versehen sein. Sie können für eine bessere Reflektion innerhalb der Leuchte 1 genutzt werden. Die Beschichtung 34 auf der inneren und auf der äußeren Schicht 22, 23 kann in unterschiedlichen Materialien und/oder Farbgestaltungen ausgebildet sein.

## Patentansprüche

1. Leuchte (1) für Fahrzeuge, vorzugsweise für Kraftfahrzeuge, mit einem Gehäuse und einer Lichtscheibe (20), hinter der wenigstens ein Leuchtmittel vorgesehen und die in mindestens zwei getrennte, lichtdurchlässige und mit Abstand voneinander angeordnete Lichtfenster (6, 7) aufgeteilt ist, die gleiche und/oder unterschiedliche Leuchtfunktionen haben und zwischen denen mindestens ein wenigstens teilweise lichtundurchlässiger Bereich (11) vorhanden ist,
**dadurch gekennzeichnet,**
**dass** die Lichtscheibe (20) zwischen den Lichtfenstern (6, 7) gleicher und/oder unterschiedlicher Leuchtfunktion mindestens einen lichtundurchlässigen Bereich (11) aufweist, in welchem lichtundurchlässigen Bereich (11) wenigstens ein zusätzlicher lichtdurchlässiger Bereich (21) angeordnet ist, wobei dem mindestens einen lichtdurchlässigen Bereich (21) mindestens eine Leuchtfunktion mindestens eines benachbarten Lichtfensters (6, 7) zugeordnet ist.

2. Leuchte nach Anspruch 1,
**dadurch gekennzeichnet, dass** der lichtdurchlässige Bereich (21) streifenförmig ausgebildet ist oder runden, unrunden oder eckigen Umriss hat.

3. Leuchte nach Anspruch 1 oder 2,
**dadurch gekennzeichnet, dass** der Abstand zwischen den Rändern der Lichtfenster (6, 7) und dem zusätzlichen lichtdurchlässigen Bereich (21) kleiner ist als etwa 15 mm.

4. Leuchte nach einem der Ansprüche 1 bis 3,
**dadurch gekennzeichnet, dass** der Abstand zwischen den Rändern von wenigstens zwei mit Abstand voneinander liegenden lichtdurchlässigen Bereichen (21) kleiner ist als etwa 15 mm.

5. Leuchte nach einem der Ansprüche 1 bis 4,
**dadurch gekennzeichnet, dass** dem lichtdurchlässigen Bereich (21) und den Lichtfenstern (6, 7) eine gemeinsame oder jeweils wenigstens eine Lichtquelle (31) zugeordnet ist.

6. Leuchte nach einem der Ansprüche 1 bis 5,
**dadurch gekennzeichnet, dass** der lichtdurchlässige Bereich (21) in einer von den Lichtfenstern (6, 7) abweichenden Farbe leuchtet, und dass vorteilhaft den Lichtfenstern (6, 7) im Innern der Leuchte (1) ein gemeinsamer Reflektor (30) oder jedem Lichtfenster (6, 7) ein Reflektor (30) zugeordnet ist.

7. Leuchte, insbesondere nach einem der Ansprüche 1 bis 6,
**dadurch gekennzeichnet, dass** die Lichtscheibe (20) aus wenigstens zwei Schichten (22, 23) besteht.

8. Leuchte nach Anspruch 7,
**dadurch gekennzeichnet, dass** eine äußere Schicht (23) der Lichtscheibe (20) im lichtdurchlässigen Bereich (21) unterbrochen und vorteilhaft für Lichtstrahlen (24) des Leuchtmittels (31) undurchlässig oder durchlässig ist.

9. Leuchte nach Anspruch 8,
**dadurch gekennzeichnet, dass** eine innere Schicht (22) der Lichtscheibe (20) mindestens eine Verdickung (27) aufweist, die in die Unterbrechung der äußeren Schicht (23) eingreift.

10. Leuchte nach einem der Ansprüche 7 bis 9,
**dadurch gekennzeichnet, dass** die äußere Schicht (23) der Lichtscheibe (20) mittels eines Mehrschicht-Spritzverfahrens auf die innere Schicht (22) aufgebracht ist.

11. Leuchte nach Anspruch 9 oder 10,
**dadurch gekennzeichnet, dass** die Verdickung (27) der inneren Schicht (22) aus einem anderen Material besteht und/oder eine andere Farbe als die innere Schicht (22) aufweist.

12. Leuchte nach einem der Ansprüche 7 bis 11,
**dadurch gekennzeichnet, dass** die äußere Schicht (23) der Lichtscheibe (20) mit einer umhüllenden Beschichtung (34) versehen ist, die vorteilhaft eine Lackbeschichtung oder eine Folienbeschichtung ist.

13. Leuchte nach einem der Ansprüche 9 bis 12,
**dadurch gekennzeichnet, dass** die Stirnseite der Verdickung (27) der inneren Schicht (22) und die Außenseite der äußeren Schicht (23) der Lichtscheibe (20) im Wesentlichen bündig liegen, und dass vorteilhaft die Verdickung (27) der inneren Schicht (22) eine Optik oder eine optische Struktur aufweist.

## Claims

1. A lamp (1) for vehicles, preferentially for motor vehicles, with a housing and a lens (20) behind which at least one illuminant is provided and which is divided into at least two separate, light-permeable light windows (6,7) arranged spaced from one another which have same and/or different lighting functions and between which at least one partially light-impermeable region (11) is present, **characterized in that** the lens (20) between the light windows (6,7) of same and/or different illuminating function comprises at least one light-impermeable region (11), in which light-impermeable region (11) at least one additional light-permeable region (21) is arranged, wherein the at least one light-permeable region (21) is assigned at least one illuminating function of at least one neighbouring light window (6,7).

2. The lamp according to Claim 1, **characterized in that** the light-permeable region (21) is designed strip-shaped or has a round, non-round or angular outline.

3. The lamp according to Claim 1 or 2, **characterized in that** the spacing between the edges of the light windows (6,7) and the additional light-permeable region (21) is smaller than approximately 15 mm.

4. The lamp according to any one of the Claims 1 to 3, **characterized in that** the spacing between the edges of at least two light-permeable regions (21) spaced from one another is smaller than approximately 15 mm.

5. The lamp according to any one of the Claims 1 to 4, **characterized in that** the light-permeable region (21) and the light windows (6,7) are assigned a common or at least one light source (31) each.

6. The lamp according to any one of the Claims 1 to 5, **characterized in that** the light-permeable region (21) lights in a colour deviating from the light windows (6,7) and **in that** advantageously the light windows (6,7) in the interior of the lamp (1) are assigned a common reflector (30) or a reflector (30) to each light window (6,7).

7. The lamp, more preferably according to any one of the Claims 1 to 6, **characterized in that** the lens (20) consists of at least two layers (22, 23).

8. The lamp according to Claim 7, **characterized in that** an outer layer (23) of the lens (20) in the light-permeable region (21) is interrupted and advantageously impermeable or permeable to light rays (24) of the illuminant (31).

9. The lamp according to Claim 8, **characterized in that** an inner layer (22) of the lens (20) comprises at least one bulge (27) which engages in the interruption of the outer layer (23).

10. The lamp according to any one of the Claims 7 to 9, **characterized in that** the outer layer (23) of the lens (20) is applied to the inner layer (22) by means of a multi-layer spray method.

11. The lamp according to Claim 9 or 10, **characterized in that** the bulge (27) of the inner layer (22) consists of another material and/or another colour than that of the inner layer (22).

12. The lamp according to any one of the Claims 7 to 11, **characterized in that** the outer layer (23) of the lens (20) is provided with an enveloping coating (34) which advantageously is a paint coating or a foil coating.

13. The lamp according to any one of the Claims 9 to 12, **characterized in that** the face end of the bulge (27) of the inner layer (22) and the outside of the outer layer (23) of the lens (20) are located substantially flush and that advantageously the bulge (27) of the inner layer (22) comprises optics or an optical structure.

## Revendications

1. Lampe (1) pour véhicules, de préférence pour véhicules automobiles, comprenant un boîtier et un disque lumineux (20), derrière lequel est prévu au moins un moyen d'éclairage et qui est divisé en au moins deux fenêtres de lumière (6, 7) séparées, transparentes et disposées à distance l'une de l'autre, qui ont des fonctions d'éclairage identiques et/ou différentes et entre lesquelles est présente au moins une zone (11) au moins en partie opaque,
**caractérisée en ce que**
le disque lumineux (20) présente entre les fenêtres de lumière (6, 7) de fonction d'éclairage identique et/ou différente au moins une zone (11) opaque, zone (11) opaque dans laquelle est disposée au moins une zone (21) transparente supplémentaire, au moins une fonction d'éclairage d'au moins une fenêtre de lumière (6, 7) étant attribuée à la au moins une zone (21) transparente.

2. Lampe selon la revendication 1,
**caractérisée en ce que** la zone (21) transparente est conçue en forme de bande ou présente un contour rond, ovale ou anguleux.

3. Lampe selon la revendication 1 ou 2,
**caractérisée en ce que** la distance entre les bords des
fenêtres de lumière (6, 7) et la zone (21) transparente supplémentaire est inférieure à environ 15 mm.

4. Lampe selon l'une quelconque des revendications 1 à 3,
**caractérisée en ce que** la distance entre les bords d'au moins deux zones (21) transparentes et espacées l'une de l'autre est inférieure à environ 15 mm.

5. Lampe selon l'une quelconque des revendications 1 à 4,
**caractérisée en ce qu'**une source de lumière (31) commune ou à chaque fois au moins une source de lumière (31) est attribuée à la zone (21) transparente et aux fenêtres de lumière (6, 7).

6. Lampe selon l'une quelconque des revendications 1 à 5,
**caractérisée en ce que** la zone (21) transparente éclaire dans une couleur différente des fenêtres de lumière (6, 7) et **en ce que**, de façon avantageuse, un réflecteur (30) commun est attribué aux fenêtres de lumière (6, 7) à l'intérieur de la lampe (1) ou un réflecteur (30) est attribué à chaque fenêtre de lumière (6, 7).

7. Lampe, en particulier selon l'une quelconque des revendications 1 à 6,
**caractérisée en ce que** le disque de lumière (20) est constitué d'au moins deux couches (22, 23).

8. Lampe selon la revendication 7,
**caractérisée en ce qu'**une couche (23) extérieure du disque de lumière (20) est interrompue dans la zone (21) transparente et est opaque ou transparente avantageusement pour des faisceaux lumineux (24) du moyen d'éclairage (31).

9. Lampe selon la revendication 8,
**caractérisée en ce qu'**une couche (22) intérieure du disque de lumière (20) présente au moins un épaississement (27) qui s'engage dans l'interruption de la couche (23) extérieure.

10. Lampe selon l'une quelconque des revendications 7 à 9,
**caractérisée en ce que** la couche (23) extérieure du disque de lumière (20) est appliquée au moyen d'un procédé d'injection multicouche sur la couche (22) intérieure.

11. Lampe selon la revendication 9 ou 10,
**caractérisée en ce que** l'épaississement (27) de la couche (22) intérieure est à base d'un autre matériau et/ou présente une autre couleur que la couche (22) intérieure.

12. Lampe selon l'une quelconque des revendications 7 à 11,
**caractérisée en ce que** la couche (23) extérieure du disque de lumière (20) est dotée d'un revêtement (34) enveloppant, qui est avantageusement un revêtement de laque ou un revêtement de feuille.

13. Lampe selon l'une quelconque des revendications 9 à 12,
**caractérisée en ce que** le côté avant de l'épaississement (27) de la couche (22) intérieure et le côté extérieur de la couche (23) extérieure du disque de lumière (20) sont disposés sensiblement au même niveau et **en ce que**, de façon avantageuse, l'épaississement (27) de la couche (22) intérieure présente une optique ou une structure optique.
